# EUROPEAN PATENT SPECIFICATION

(11) **EP 3 202 634 B1**
(45) Date of publication and mention of the grant of the patent: **21.08.2019**
(21) Application number: 14903367.2
(22) Date of filing: 03.10.2014
(51) Int. Cl.: B61D 27/00

(54) **RAILWAY CAR HAVING AIR CONDITIONING DEVICES IN ENGINEER'S CABIN, GALLEY, AND PASSENGER CABIN**
EISENBAHNWAGEN MIT KLIMATISIERUNGSVORRICHTUNGEN IN DER KABINE, IN DER BORDKÜCHE UND IM FAHRGASTRAUM
VOITURE DE CHEMIN DE FER COMPORTANT DES DISPOSITIFS DE CONDITIONNEMENT D'AIR DANS LE POSTE DE CONDUITE, LA CUISINE ET LE COMPARTIMENT PASSAGERS

(43) Date of publication of application: 09.08.2017
(73) Proprietor: Hitachi, Ltd., Tokyo 100-8280 (JP)
(72) Inventor: HAYASHI, Tomoo, Tokyo 100-8280 (JP); YAMAMOTO, Takahisa, Tokyo 100-8280 (JP); YAMAOKA, Yasuhiro, Tokyo 100-8280 (JP); KAWASAKI, Akinori, Tokyo 100-8280 (JP); TSUKAMOTO, Suguru, Tokyo 100-8280 (JP); MIYAKAWA, Jun, Tokyo 100-8280 (JP); ODA, Kaoru, Tokyo 100-8280 (JP); FUKUHARA, Ryota, Tokyo 100-8280 (JP)
(74) Representative: Mewburn Ellis LLP
(86) International application number: PCT/JP2014/076485
(87) International publication number: WO 2016/051580

(56) References cited:
- WO-A1-2009/144808
- GB-A- 2 472 534
- JP-A- H0 569 824
- JP-A- H0 569 824
- JP-A- S5 657 508
- JP-A- H09 156 355
- JP-A- H09 156 356
- JP-A- 2013 159 231
- JP-U- S62 172 672
- US-A- 2 367 276
- US-A- 2 600 889

## Description

### Technical Field

The present invention relates to a railway vehicle having individual air conditioners in a driver's cabin, a galley and a passenger cabin.

### Background Art

In a railway vehicle, air conditioners are installed on a roof for keeping the temperature and humidity in the vehicle comfortable. For example, when the outside air temperature and the vehicle interior temperature are both high, air inside the vehicle of high temperature and high humidity is taken into the air conditioner to condition the temperature and humidity, and then returned to the inside of the vehicle, thereby maintaining comfortable environment inside the vehicle. In this case, increase of carbon dioxide and retention of odors in the vehicle are suppressed by ventilation in which part of air inside the vehicle taken into the air conditioner is discharged to the outside of the vehicle as well as fresh air is taken into the inside of the air conditioner from the outside of the vehicle.

In the case where the air conditioner having functions of ventilation and adjustment of temperature and humidity fails, comfortability inside the vehicle may be largely inhibited, therefore, plural air conditions are installed in one railway vehicle to increase redundancy. Patent Literature 1 discloses a technique for increasing redundancy with respect to the failure of the air conditioner by installing plural refrigerating cycles in one air conditioner as well as by installing two such air conditioners in one vehicle for suppressing deterioration of vehicle interior environment when the air conditioner fails.

### Citation List

### Patent Literature

Patent Literature 1: JP H09 156355 A
Patent Literature 2: GB 2472534 A

### Summary of Invention

### Technical Problem

In railway vehicles, there exists a railway vehicle including a driver's cabin where a driver works, a galley for providing light meals and a passenger cabin for accommodating passengers, and three air conditioners for conditioning air in these respective cabins are individually installed in this vehicle.

When the air conditioner in the driver's cabin fails, it is desirable that conditioned air can be supplied to the driver's cabin from the air conditioner for the galley or the air conditioner for the passenger cabin. In the galley where cooking devices such as a cooking stove are installed, odors tend to occur by cooking, and it is desirable to prevent these odors from being diffused to the driver's cabin and the passenger cabin. Furthermore, in the case where a fire occurs in the galley where cooking devices such as the cooking stove are installed or in the passenger cabin, since the railway vehicle have to be moved to a safe place and stop there, it is required to prevent smoke caused by the fire flowing into the driver's cabin.

Although a structure of an air-conditioning duct which does not impair comfortability of passengers when one air conditioner fails is described in Patent Literature 1, there is no consideration about suppression of diffusion of odors in the galley to the passenger cabin or the driver's cabin and about suppression of intrusion of smoke caused by the fire occurring in the galley or the passenger cabin to the driver's cabin.

Patent Literature 2 discloses an air conditioning system for a vehicle.

Accordingly, an object of the invention is to provide a railway vehicle capable of suppressing diffusion of odors occurring in the galley into the passenger cabin or the driver's cabin which is adjacent thereto and suppressing intrusion of smoke caused by a fire occurring in the galley or the passenger cabin into the driver's cabin while maintaining comfortable environment in the vehicle and increasing the redundancy at the time of failure of the air conditioner.

### Solution to Problem

According to the invention there is provided a railway vehicle as set out in claim 1.

### Advantageous Effects of Invention

According to the invention, it is possible to provide a railway vehicle capable of suppressing diffusion of odors in the galley to the driver's cabin or the passenger cabin which is adjacent thereto and suppressing intrusion of smoke caused by a fire occurring in the galley or the passenger cabin to the driver's cabin while maintaining comfortable vehicle environment and increasing the redundancy at the time of failure of the air conditioner. The problems, structures and effects other than the above will be cleared by the following explanation of an embodiment.

### Brief Description of Drawings

Fig. 1 is a perspective view of a railway vehicle according to an embodiment of the invention.
Fig. 2 is a cross-sectional view of a cross section A of the railway vehicle of Fig. 1 seen from above.
Fig. 3 is a view showing B-B cross section of the railway vehicle of Fig. 2.
Fig. 4 is a view showing C-C cross section of the railway vehicle of Fig. 2.
Fig. 5 is a view showing D-D cross section of the railway vehicle of Fig. 2.
Fig. 6 is a view showing an enlarged part of a part "E" in the railway vehicle shown in Fig. 2.
Fig. 7 is a system diagram showing a relation between information inputted to a controller and target devices controlled by the controller.
Fig. 8 is a chart showing examples of control rules for air supply valves, exhaust valves, exhaust blowers and opening/closing devices mounted on respective air conditioners.

### Description of Embodiments

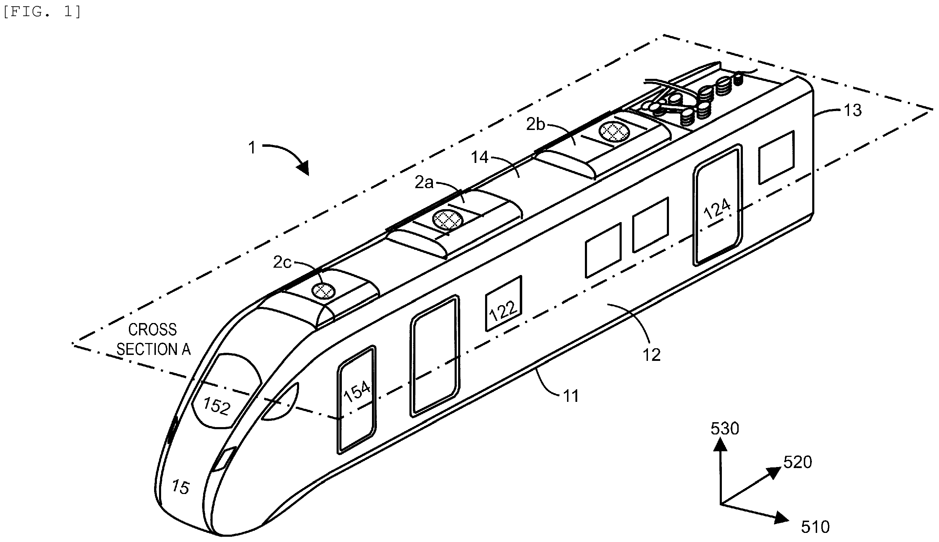

An embodiment of the invention will be explained with reference to Fig. 1 to Fig. 8. First, directions relating to a railway vehicle are defined as follows: a width direction (sleeper direction) of the railway vehicle is denoted by 510, a longitudinal direction of the railway vehicle is denoted by 520 and a height direction of the railway vehicle is denoted by 530. Hereinafter, these directions may be occasionally abbreviated as the width direction 510, the longitudinal direction 520 and the height 530, respectively.

Fig. 1 is a perspective view of a railway vehicle according to an embodiment of the invention. The railway vehicle 1 includes an underframe 11 forming a floor, side structure bodies 12 provided to stand on both ends of the underframe 11 in the width direction 520, a forefront structure body 15 and an end structure body 13 provided to stand on both ends of the underframe 11 in the longitudinal direction 520, and a roof structure body 14 placed on upper ends of the side structure bodies 12, the forehead structure body 15 and the end structure body 13 in the height direction 530.

The structure bodies constituting the railway vehicle 1 are formed of a hollow extruded shape material made of aluminum alloy in which two face plates facing each other are connected by ribs for realizing both reduction of weight and improvement of productivity. Both ends of the underframe 11 in the longitudinal direction 520 constituting the railway vehicle 1 are supported by bogies having wheel axles rolling on an orbit.

In the side structure body 12 constituting the railway vehicle 1, windows 122 and a vestibule 124 serving as getting on and off of passengers are formed. The vestibule 124 is provided with a side sliding door along the longitudinal direction of the railway vehicle 1 so as to be opened and closed. In the forefront structure body 15, a window 152 and a vestibule for crews 154 serving as getting on and off of crews are formed.

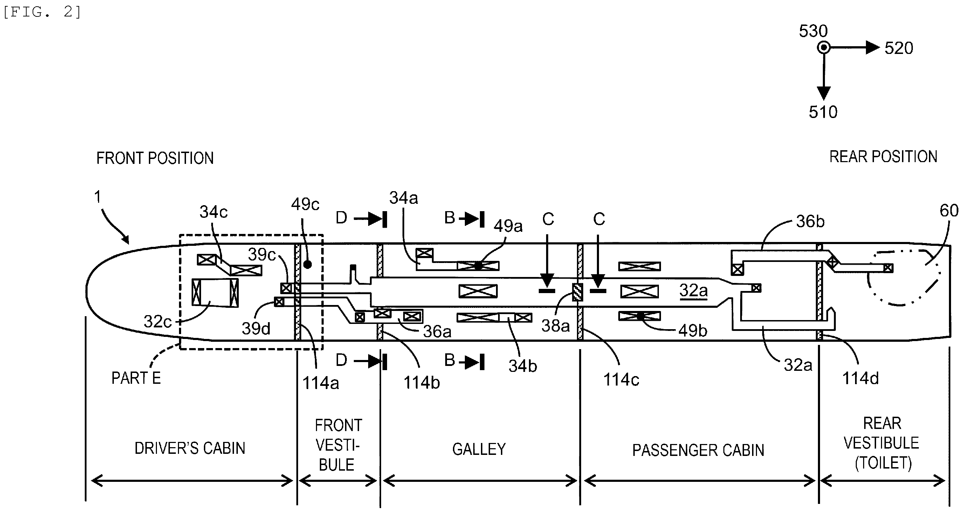

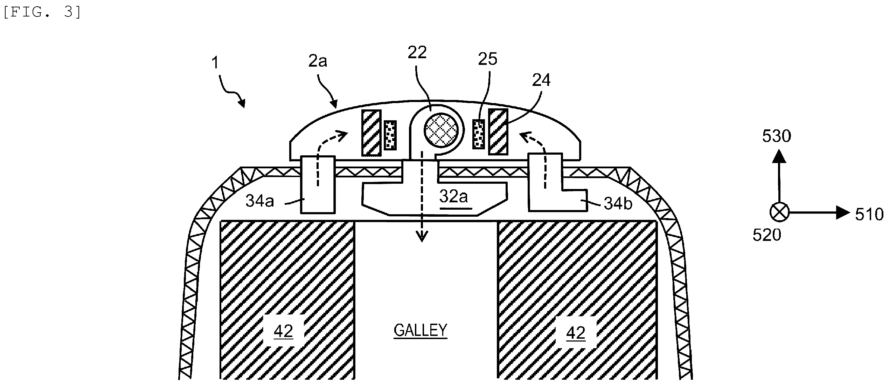

Fig. 2 is a cross-sectional view of a cross section A of the railway vehicle of Fig. 1 seen from above, and Fig. 3 is a view showing B-B cross section of the railway vehicle of Fig. 2. The interior of the railway vehicle 1 is partitioned (compartmentalized) into a driver's cabin, a front vestibule, a galley, a passenger cabin and a rear vestibule including a toilet in this order from a front position side by respective partition walls 114a to 114d, and doors through which crews and passengers can pass are provided in respective partition walls 114a to 114d.

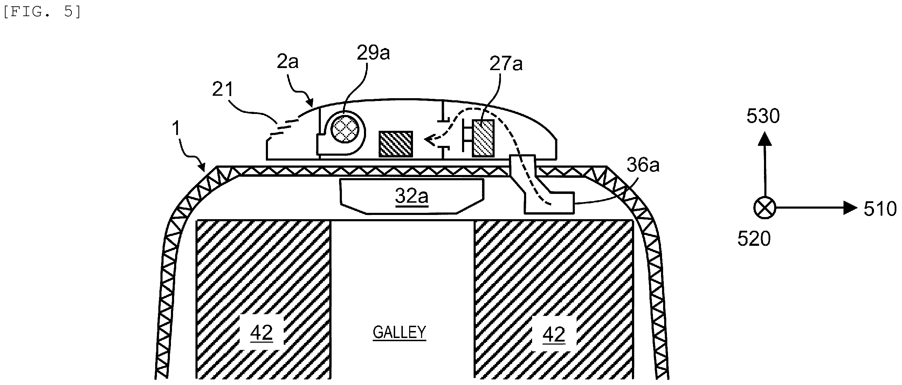

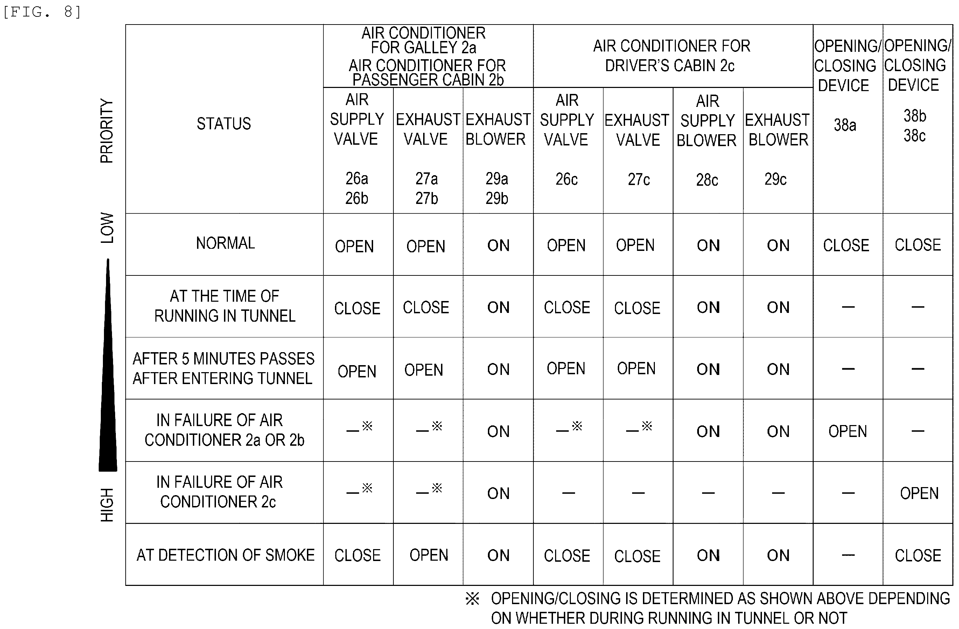

On upper faces of the roof structure body 14 which covers the driver's cabin, the galley and the passenger cabin partitioned by respective partition walls 114a to 114e, an air conditioner for the driver's cabin 2c, an air conditioner for the galley 2a and an air conditioner for the passenger cabin 2b are individually provided (see Fig. 1) . The air conditioner for the galley 2a and the air conditioner for the passenger cabin 2b each has a refrigerating cycle in which a refrigerant circulates, including a compressor, an indoor heat exchanger, an outdoor heat exchanger and so on, an outdoor blower provided in the outdoor heat exchanger, an indoor blower provided in the indoor heat exchanger, a heater (provided in the indoor heat exchanger) and exhaust blowers 29a (see Fig. 5), 29b (operation of which will be described later in Fig. 8, though not shown) for exhausting air inside the vehicle to the outside of the vehicle. The air conditioner for the galley 2a and the air conditioner for the passenger cabin 2b do not have an air supply blower, and fresh outdoor air (air supply) corresponding to an amount of air discharged to the outside of the vehicle is introduced into the air conditioners (vehicle) from air supply openings provided in both air conditioners by operations of the exhaust blowers 29a and 29b. The air conditioner for the driver's cabin 2c is provided with an air supply blower 28c (operation of which will be described later in Fig. 8, though not shown) for taking fresh air of the outside of the vehicle into the air conditioner in addition to respective apparatuses installed in the air conditioner for the galley 2a and the like.

The respective air conditioners 2a, 2b and 2c are provided with fresh air intake openings for taking vehicle outside air into the air conditioner and exhaust air discharge openings for exhausting air inside the vehicle to the outside of the vehicle. In the fresh air intake openings, air supply valves 26a, 26b and 26c for opening/closing the intake openings (operation of which will be described in Fig. 8) are provided, and exhaust valves 27a, 27b an 27c (see Fig. 5 concerning the exhaust valve 27a) for opening/closing discharge openings of the exhaust air discharge openings are provided.

When the railway vehicle passes through a tunnel at high speed, an air pressure in the outside of the vehicle largely varies in a short period of time with compression/expansion of air inside the tunnel. Due to such variation of the vehicle outside pressure, air inside the vehicle is excessively discharged to the outside of the vehicle or air outside the vehicle is excessively pushed to the inside of the vehicle through the air conditioners, which changes a pressure inside the vehicle to be a factor of making passengers and crews feel uncomfortable in sense of hearing.

In order to suppress the uncomfortable phenomenon, the air supply valves and the exhaust valves provided together in the air conditioners are controlled to be closed when the railway vehicle enters the tunnel at high speed and to be opened when the railway vehicle leaves from the tunnel. In the case where the vehicle stops inside the tunnel due to disruption of train schedules caused by a bad weather or the like, it is assumed that a state where the railway vehicle is not ventilated for many hours continues and the environment in the vehicle is deteriorated. In preparation for the above situation, a timer is provided, which releases the air supply valves and the exhaust valves after a predetermined time (for example, five minutes) counted from the time when the air supply valves and the exhaust valves are closed passes, regardless of whether the railway vehicle leaves the tunnel.

On a ceiling part of the railway vehicle 1, return ducts 34a, 34b and 34c for taking air inside the vehicle into respective air conditioners, conditioned air ducts 32a and 32c for blowing conditioned air temperature/humidity of which are conditioned in respective air conditioners to the passenger cabin and the like, and exhaust air ducts 36a and 36b for guiding air to the air conditioners, which is discharged from the inside of the vehicle to the outside of the vehicle.

The front vestibule and the rear vestibule are sections where passengers and crews basically do not always stay, therefore, air conditioners corresponding to both these sections are not provided in the embodiment. Therefore, the conditioned air ducts and the exhaust air ducts are extended from air conditioners corresponding to the adjacent galley and the passenger cabin both the sections, and conditioned air is supplied and exhaust air is discharged through these ducts.

The conditioned air duct 32a is arranged in a range from the driver's cabin to the rear vestibule through the front vestibule, the galley and the passenger cabin (a range extending over almost the entire length of the railway vehicle 1), and conditioned air is supplied to the conditioned air duct 32a from the air conditioner for the galley 2a and the air conditioner for the passenger cabin 2b.

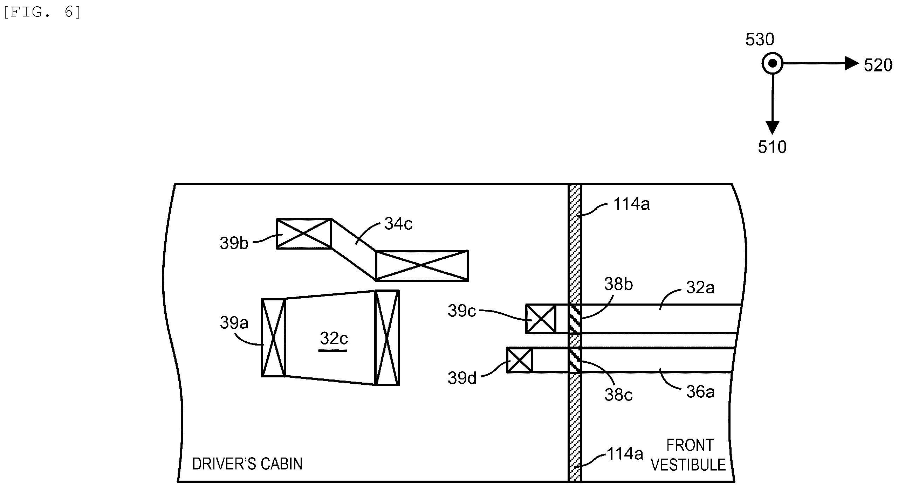

On a side (side surface in the width direction 510) of the conditioned air duct 32a laid in the galley and the passenger cabin, openings are provided, and conditioned air is supplied to the inside of the galley and the passenger cabin from the openings. In the vicinity of a part above the partition wall 114a in the conditioned air duct 32a, an opening/closing device 38b which blocks conditioned air flowing inside the conditioned air duct 32a is provided as shown in Fig. 6 as an enlarged view of a part "E" of Fig. 1. Similarly, an opening/closing device 38a is provided in the vicinity of a part above the partition wall 114c in the conditioned air duct 32a as shown in Fig. 2.

The vicinity of the part above the partition wall 114a as the installation position of the opening/closing device 38b is preferably the conditioned air duct 32a in a range including the driver's cabin to the front vestibule extending along the longitudinal direction 520 with the partition wall 114a interposed therebetween. Similarly, the vicinity of the part where the opening/closing device 38a penetrates the partition wall 114c is preferably the vicinity of the partition wall 114c in a range from the galley to the passenger cabin.

As shown in Fig. 3, return ducts 34a and 34b for taking air in the galley into the air conditioner for the galley 2a are provided on the ceiling of the galley. The air inside the galley taken into the return ducts 34a and 34b moves along the longitudinal direction 520 inside the duct, then, taken into the inside of the air conditioner for the galley 2a from return openings provided on a bottom of the air conditioner for the galley 2a. The air taken into the air conditioner for the galley 2a is conditioned in temperature and humidity in a process of passing through an indoor heat exchanger 24 in summer and in a process of passing through a heater 25 in winder, then, the air is pressure fed to the conditioned air duct 32a by an indoor blower 22 and is supplied into the galley as the conditioned air.

On a ceiling of the driver's cabin, the return duct 34c for taking air in the driver's cabin into the air conditioner for the driver's cabin 2c (see Fig. 1) and the conditioned air duct 32c for supplying the conditioned air the temperature and humidity of which are adjusted to respective parts of the driver's cabin are provided as shown in Fig. 6. The air inside the driver's cabin passes from a return opening 39b provided on the ceiling of the driver's cabin through the return duct 34c and is conditioned inside the air conditioner for the driver's cabin 2c, then, passes through the conditioned air duct 32c and returns into the driver's cabin from an opening 39a for supplying the conditioned air.

Cooking devices such as a cooking stove having a high heat load are installed in the galley, therefore, when exhaust heat generated by these devices is taken into the air conditioner for the galley 2a, an operation rate of the air conditioner for the galley 2a (specifically, an operation rate of a compressor forming the refrigerating cycle) is increased, and power consumption consumed by the air conditioner for the galley 2a is increased. In order to realize energy saving by suppressing the increase of power consumption in the air conditioner for the galley 2a, the exhaust air duct 36a is arranged on the ceiling above the cooking devices such as the cooking stove having a high heat load provided in the galley as shown in Fig. 5. Accordingly, high exhaust heat is suppressed to be collected by the return ducts 34a and 34b (see Fig. 3) and is exhausted to the outside of the vehicle by the exhaust blower 29a of the air conditioner for the galley 2a. The high exhaust heat is discharged to the outside of the vehicle without being taken into the air conditioner as described above, thereby reducing the operation rate of the air conditioner and reducing a power consumption amount consumed in the air conditioner to realize energy saving.

Furthermore, as shown in Fig. 2, exhaust air to be discharged to the outside of the vehicle from the toilet provided in the rear vestibule passes above the partition wall 114d from a ceiling of the toilet so as not to be mixed with return air to be taken into the air conditioner for the passenger cabin 2b and directly discharged to the outside of the vehicle via the exhaust air duct 36b connecting to the exhaust blower of the air conditioner for the passenger cabin 2b. The exhaust air from the toilet is not mixed with the return air to be taken into the air conditioner for the passenger cabin 2b, therefore, it is possible to suppress odors flowing into the passenger cabin and the galley adjacent to the passenger cabin.

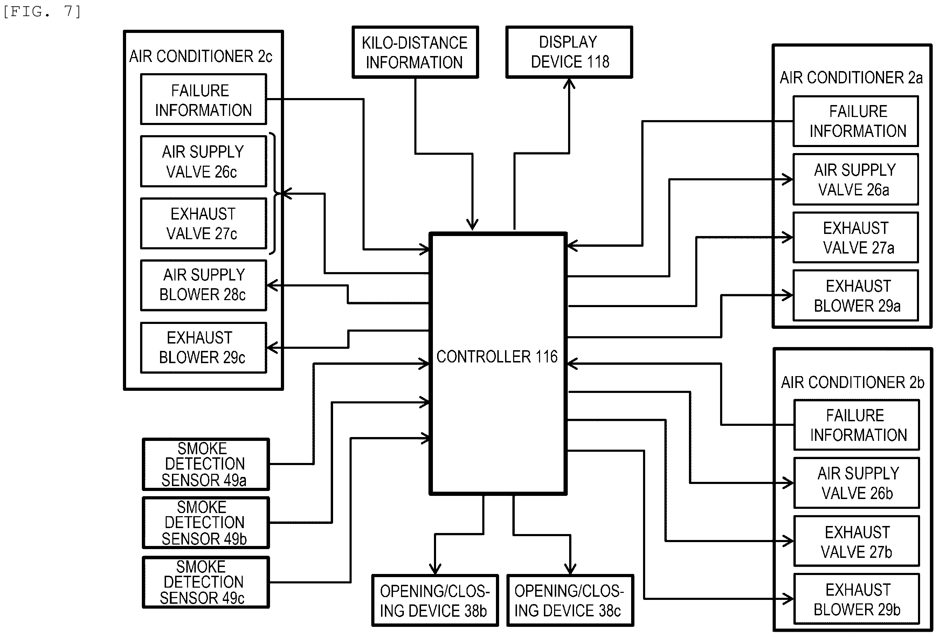

A smoke detection sensor 49a for detecting a fire occurring inside the railway vehicle is provided in a return air intake opening of the return duct 34a in the air conditioner for the galley 2a. Similarly, a smoke detection sensor 49b is provided in a return air intake opening of the air conditioner for the passenger cabin 2b, and a smoke sensor 49c is provided on a ceiling of the front vestibule. In the case where these smoke detection sensors detect smoke, a detection signal of each smoke detection sensor is transmitted to a controller 116 (see Fig. 7). The controller 116 receiving the smoke detection signal opens/closes respective opening/closing devices provided in the conditioned air duct and closes the air supply valves and the exhaust valves provided in respective air conditioners, then, controls the exhaust blowers based on a predetermined operation mode at the time of occurrence of a fire.

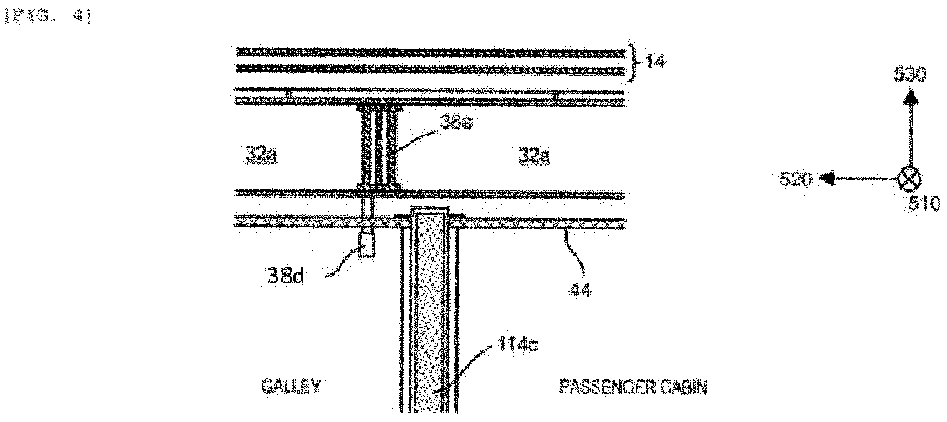

Fig. 4 is a view showing C-C cross section of the railway vehicle of Fig. 2. The opening/closing device 38 for blocking the flow of conditioned air is provided inside the conditioned air duct 32a arranged in the part above the partition wall 114c as a partition between the galley and the passenger cabin. Normally, the opening/closing device 38a is blocked so as to suppress conditioned air conditioned in the air conditioner for the galley 2a and conditioned air conditioned in the air conditioner for the passenger cabin 2b to be mixed inside the conditioned air duct 32a. Furthermore, conditioned air conditioned in the air conditioner for the galley 2a is suppressed to be supplied to the passenger cabin via the conditioned air duct 32a, thereby preventing diffusion of odors.

An operating portion 38d which penetrates a ceiling panel 44 so that opening/closing operation can be performed from the galley is provided in a lower part of the opening/closing device 38a. The opening/closing device 38a can be opened/closed by a crew operating the operation portion 38d. The operation portion 38d is operated according to need, for example, in the case where the air conditioner for the galley 2a fails or in the case where the air conditioner for the passenger cabin 2b fails, thereby introducing conditioned air conditioned in the air conditioner for the passenger cabin 2b or conditioned air conditioned in the air conditioner for the galley 2a to the passenger cabin to suppress deterioration of temperature environment in the galley or the passenger cabin. Though the example in which the opening/closing operation of the opening/closing device 38a is manually executed by a crew is shown, it is also possible to adopt a mechanism in which the opening/closing device 38a can be automatically opened/closed by electric power, an air pressure or a spring force based on a control signal from the controller 116.

Fig. 5 is a view showing D-D cross section of the railway vehicle of Fig. 2. The exhaust air duct 36a is provided over the ceilings of the driver's cabin, the front vestibule and the galley, and exhaust air from respective sections (compartments) passes through the exhaust air duct 36a and discharged to the outside of the vehicle by the exhaust blower 29a provided in the air conditioner for the galley 2a. On an upstream side of the exhaust blower 29a, an exit for exhaust air provided with the exhaust valve 27a is formed, and an opening for taking air outside the vehicle into the air conditioner and the air supply valve 26a (not shown) which can open/close the opening are provided in the vicinity of the indoor heat exchanger (see Fig. 3) .

The air supply valve 26a and the exhaust valve 27a are closed when the railway vehicle 1 enters the tunnel at a higher speed than the predetermined speed, thereby suppressing air inside the vehicle to be excessively discharged to the outside of the vehicle and suppressing air outside the vehicle (inside the tunnel) to be excessively taken into the vehicle due to variation of the pressure outside the vehicle received when the railway vehicle 1 passes through the tunnel at high speed, which prevents passengers, crews and others from feeling uncomfortable in sense of hearing.

Fig. 6 is a view showing an enlarged part of a part "E" in the railway vehicle shown in Fig. 2. One end of the conditioned air duct 32a which is arranged over almost the entire length of the railway vehicle 1 extends to the driver's cabin in a manner of penetrating above the partition wall 114a as a partition between the front vestibule and the driver's cabin, and an opening 39c which supplies conditioned air to the driver's cabin is provided at an end (terminal portion) thereof. One end of the exhaust air duct 36a arranged from the galley to the front vestibule and driver's cabin extends to the driver's cabin in a manner of penetrating above the partition wall 114a as a partition between the front vestibule and the driver's cabin, and an opening 39d which sucks exhaust air from the driver's cabin is provided at an end (terminal portion) thereof.

The opening/closing device 38b which supplies and blocks conditioned air to the driver's cabin is provided in a portion penetrating the partition wall 114a in the conditioned air duct 32a and the exhaust air duct 36a. An opening/closing device 38c which sucks and blocks exhaust air from the driver's cabin with respect to the exhaust blower 27a is provided in a portion penetrating the partition wall 114a in the exhaust air duct 36a.

The opening/closing device 38b is normally closed, however, when the air conditioner for the driver's cabin 2c fails, the opening/closing devices 38b and 38c are opened to thereby introduce conditioned air conditioned in the air conditioner for the galley 2a into the driver's cabin. It is also possible to discharge exhaust air from the driver's cabin to the outside of the vehicle by the exhaust blower 29a of the air conditioner for the galley 2a. Furthermore, when both the air conditioner for the driver's cabin 2c and the air conditioner for the galley 2a fail, air conditioned in the air conditioner for the passenger cabin 2b can be supplied to the driver's cabin by opening the above described opening/closing devices 38a and the opening/closing devices 38b.

In the case where the smoke detection sensor provided in the galley operates while the air conditioner for the driver's cabin 2c fails and conditioned air is supplied to the driver's cabin from the air conditioner for the galley 2a, it is possible to suppress smoke and so on flowing into the driver's cabin from the galley by closing the opening/closing devices 38b.

Fig. 7 is a system diagram in which information inputted to the controller and target devices controlled by the controller are written. Fig. 7 shows only devices relating to the invention, and for example, the outdoor blower mounted on the air conditioner for the galley 2a and the like are not written.

Information to be inputted to the controller 116 includes kilo-distance information indicating a position where the railway vehicle runs, smoke detection information issued by the smoke detection sensors 49a, 49b and 49c and failure information of the air conditioner for the galley 2a, the air conditioner for the passenger cabin 2b and the air conditioner for the driver's cabin 2c.

The controller 116 can determines that the railway vehicle is running in a section not requiring vehicle interior lighting just before entering the tunnel, that the railway vehicle is passing through the tunnel section, that the railway vehicle is running in a section not requiring vehicle interior lighting after leaving the tunnel and other situations based on kilo-distance information and information of a running route inputted in advance before operation.

Targets controlled by the controller 116 are a display device 118 displaying operation statuses of respective air conditioners and so on to crews and others, the air supply valves 26a, 26b and 26c, the exhaust valves 27a, 27b and 27c, the air supply blower 28c, the exhaust blowers 29a, 29b and 29c and the opening/closing devices 38b and 38c which are included in respective air conditioners 2a, 2b and 2c. When failure information or smoke detection information of respective air conditioners is inputted to the controller 116, the failure information or smoke detection information is displayed on the display device 118, therefore, crews are capable of checking a site, preparing for guiding passengers for evacuation and communicating with various related parties immediately after an event occurs.

Fig. 8 is a chart showing examples of control rules for the air supply valves, the exhaust valves, the exhaust blowers and the opening/closing devices mounted on respective air conditioners. Normally, the air supply valves 26a, 26b and the exhaust valves 27a, 27b of the air conditioner for the galley 2a and the air conditioner for the passenger cabin 2b are opened, and fresh air (air supply) corresponding to exhaust air discharged from the inside of the vehicle (particularly, the galley and the passenger cabin) to the outside of the vehicle by the exhaust blowers 29a and 29b is taken into the air conditioners (the inside of the vehicle) from fresh air intake openings of these air conditioners to perform ventilation. In the air conditioner for the driver's cabin 2c, the air supply valve 26c and the exhaust valve 29c are opened to thereby ventilate the driver's cabin by the exhaust blower 29c and the air supply blower 28c.

At this time, the opening/closing devices 38a and 38b provided in the conditioned air duct 32a, and the opening/closing device 38c provided in the exhaust air duct 36 are closed, thereby preventing leakage of odors inside the galley to the driver's cabin and the passenger cabin via the conditioned air duct 32a.

When the railway vehicle 1 runs inside the tunnel, the air supply valves 26a, 26b and 26c and the exhaust valves 27a, 27b and 27c are closed just before the railway vehicle 1 runs into the tunnel based on tunnel position information and route information previously inputted before operation as described above, thereby suppressing variation of the pressure inside the vehicle caused by sudden change of the pressure inside the tunnel. A time after the air supply valves 26a, 26b and 26c and the exhaust valves 27a, 27b and 27c are closed is counted by a timer which is activated at the same time as respective valves are closed just before the railway vehicle 1 runs into the tunnel. When a predetermined time (for example, five minutes) passes, the air supply valves 26a, 26b and 26c and the exhaust valves 27a, 27b and 27c are opened to perform ventilation again regardless of the position (even inside the tunnel) of the railway vehicle 1. According to the operation, it is possible to suppress increase in a concentration of a carbon dioxide gas (CO₂) or increase of odors inside the vehicle caused by extension of time during which ventilation is not performed such as the case of disruption of train schedules caused by a bad weather or the like, cases where the railway vehicle 1 stops inside the tunnel for many hours or goes slowly in a long tunnel or other cases.

When any one of the air conditioner for the galley 2a and the air conditioner for the passenger cabin 2b fails, the opening/closing device 38a provided in the conditioned air duct 32a is opened to complement conditioned air (cooled or heated air) to each other. At this time, air inside the galley and air inside the passenger cabin circulate each other, therefore, there is a possibility that odors generated inside the galley leak to the passenger cabin. Priority is given to improvement of deterioration of temperature environment inside the vehicle due to the failure of the air conditioner while informing crews of limitation in using the cooking stove and so on if necessary.

When the air conditioner for the driver's cabin 2c fails, the opening/closing devices 38b and 38c are opened to supply conditioned air of the air conditioner for the galley 2a to the driver's cabin, thereby maintaining comfortability (temperature environment) inside the driver's cabin.

When any of the smoke detection sensors 49a, 49b and 49c detects smoke, the controller 116 closes the opening/closing devices 38b and 38c so that smoke generated in the galley, the passenger cabin, the front vestibule or the rear vestibule does not flow into the driver's cabin through the duct. The air supply valves 26a and 26b of the air conditioner for the galley 2a and the air conditioner for the passenger cabin 2b are closed and the exhaust valves 27a and 27b are opened, and operation of the exhaust blowers 29a and 29b are continued.

As the operation of the exhaust blowers 29a and 29b is continued, exhaust air is discharged to the outside of the vehicle to thereby reduce air pressures in the galley and the passenger cabin in a state where fresh air is not taken from the outside of the vehicle into the galley or the passenger cabin as the origin of a fire, therefore, it is possible to suppress diffusion of smoke and so on to the driver's cabin or an adjacent vehicle from the galley or the passenger cabin where the fire occurs. Accordingly, passengers can be guided for evacuation from the emergently stopped vehicle to the outside of the vehicle or to another adjacent vehicle easily. Furthermore, the air supply valve 26c and the exhaust valve 27c of the air conditioner for the driver's cabin 2c are closed to suppress smoke discharged by the exhaust blowers 29a and 29b from the galley or the passenger cabin as the origin of the fire to the outside of the vehicle to be taken into the driver's cabin. In particular, it is possible to reduce a risk of taking smoke discharged to the outside of the vehicle (inside the tunnel) into the driver's cabin when the railway vehicle 1 makes an emergency stop inside the tunnel.

As described above, the controller 116 follows the control rules giving top priority to the safety, therefore, in the case where the smoke detection sensor operates while the air conditioner for the driver's cabin 2c fails, the opened opening/closing devices 38b and 38c are closed when the air conditioner for the driver's cabin 2c fails, which can reduce the risk of smoke and so on caused by a fire flowing into the driver's cabin.

The invention is not limited to the above embodiment and various modification examples are included. For example, the above embodiment has been explained in detail for making the invention easily understood, and the invention is not limited to the embodiment having all explained components. Part of components in a certain embodiment can be replaced with components of another embodiment, and components of a certain embodiment can be added to components of another embodiment, as long as the resulting embodiment belongs to the scope defined by the set of claims. Moreover, components of other embodiments can be added, deleted and replaced with respect to part of components of each embodiment, as long as the resulting embodiment belongs to the scope defined by the set of claims.

### Reference Signs List

- 1:: railway vehicle, 11: underframe
- 114:: partition wall, 116: controller
- 118:: display device, 12: side structure body
- 122:: window, 124: vestibule
- 126:: sliding door, 13: end structure body
- 14:: roof structure body, 142: current collector
- 15:: forefront structure body, 152: window
- 154:: vestibule, 2a: air conditioner for galley
- 2b:: air conditioner for passenger cabin
- 2c:: air conditioner for driver's cabin
- 21:: opening, 22: indoor blower
- 24:: indoor heat exchanger, 25: electric heater
- 26:: air supply valve, 27: exhaust valve
- 28:: air supply blower, 29: exhaust blower
- 32:: conditioned air duct, 34: return duct
- 36:: exhaust air duct, 38a: opening/closing device
- 38d:: operation portion, 39: opening
- 42:: cooking equipment module, 44: ceiling panel
- 46:: partition door, 49: smoke detection
- 60:: toilet, 510: width direction of railway vehicle
- 520:: longitudinal direction of railway vehicle
- 530:: height (vertical direction) of railway vehicle

## Claims

1. A railway vehicle (1) including a driver's cabin, a galley and a passenger cabin which are respectively partitioned and individually having air conditioners (2a, 2b, 2c), comprising:
a conditioned air duct (32a) to which conditioned air is supplied from the air conditioner (2a) for the galley and the air conditioner (2b) for the passenger cabin and which is arranged over the driver's cabin, the galley and the passenger cabin;
a first opening/closing device (38b) arranged in the vicinity of a first partition wall (114a) as a partition of the driver's cabin and controlling the flow of conditioned air in the conditioned air duct (32a); and
a second opening/closing device (38a) arranged in the vicinity of a second partition wall (114c) as a partition between the galley and the passenger cabin and controlling the flow of conditioned air in the conditioned air duct (32a),
wherein the first opening/closing device (38b) and the second opening/closing device (38a) are configured such that:
when the air conditioner (2c) in the driver's cabin fails, conditioned air conditioned in the air conditioner (2a) in the galley is supplied to the driver's cabin;
when both the air conditioner (2c) in the driver's cabin and the air conditioner (2a) in the galley fail, conditioned air conditioned in the air conditioner (2b) in the passenger cabin is supplied to the driver's cabin;
when the air conditioner (2a) in the galley fails, conditioned air conditioned in the air conditioner (2b) in the passenger cabin is supplied to the galley; and
when the air conditioner (2b) in the passenger cabin fails, conditioned air conditioned in the air conditioner in the galley (2a) is supplied to the passenger cabin.

2. The railway vehicle (1) according to claim 1,
wherein a front vestibule is provided between the driver's cabin and the galley, and a rear vestibule is provided behind the passenger cabin,
the first partition wall (114a) is a partition wall between the driver's cabin and the front vestibule, and
the conditioned air duct (32a) is arranged from the driver's cabin to the rear vestibule.

3. The railway vehicle (1) according to claim 1 or 2, further comprising:
a first opening provided on a ceiling above a device with a high heat load provided in the galley; and
a first exhaust air duct (36a) connecting the opening to a first exhaust blower (29a) provided in the air conditioner (2a) for the galley.

4. The railway vehicle according to claim 2, further comprising:
a toilet (60) provided in the rear vestibule;
a second opening provided on a ceiling of the toilet (60); and
a second exhaust air duct (36b) connecting the second opening to a second exhaust blower (29b) provided in the air conditioner (2b) for the passenger cabin.

5. The railway vehicle (1) according to claim 3, further comprising:
a third opening (39d) provided on a ceiling of the driver's cabin;
a third exhaust air duct connecting from the third opening to the first exhaust air duct (36a) via an upper part of the first partition wall (114a); and
a third opening/closing device (38c) provided in the vicinity of the first partition wall (114a) in the third exhaust air duct.

6. The railway vehicle (1) according to claim 5, further comprising:
a controller (116) which opens the second opening/closing device (38a) and the third opening/closing device (38c) when the air conditioner (2c) for the driver's cabin fails.

7. The railway vehicle (1) according to claim 6,
wherein the controller (116) closes the second opening/closing device (38a) and the third opening/closing device (38c) when a smoke detection sensor (49a, 49b, 49c) provided in the railway vehicle (1) operates.

## Patentansprüche

1. Schienenfahrzeug (1), umfassend ein Fahrerabteil, eine Bordküche und ein Passagierabteil, die jeweils voneinander getrennt sind und jeweils Klimageräte (2a, 2b, 2c) aufweisen, umfassend:
einen klimatisierten Luftschacht (32a), dem klimatisierte Luft von dem Klimagerät (2a) für die Bordküche und dem Klimagerät (2b) für das Passagierabteil zugeführt wird, und der über dem Fahrerabteil, der Bordküche und dem Passagierabteil angeordnet ist;
eine erste Öffnungs-/Schließ-Vorrichtung (38b), die in der Nähe einer ersten Trennwand (111a) als eine Unterteilung des Fahrerabteils angeordnet ist und das Hindurchströmen von klimatisierter Luft im klimatisierten Luftschacht (32a) steuert; und
eine zweite Öffnungs-/Schließ-Vorrichtung (38a), die in der Nähe einer zweiten Trennwand (114c) als eine Unterteilung zwischen der Bordküche und dem Passagierabteil angeordnet ist und das Hindurchströmen von klimatisierter Luft im klimatisierten Luftschacht (32a) steuert,
wobei die erste Öffnungs-/Schließ-Vorrichtung (38b) und die zweite Öffnungs-/Schließ-Vorrichtung (38a) derart konfiguriert sind,
dass dann, wenn das Klimagerät (2c) im Fahrerabteil versagt, klimatisierte Luft, die in dem Klimagerät (2a) in der Bordküche klimatisiert wird, dem Fahrerabteil zugeführt wird;
dass dann, wenn sowohl das Klimagerät (2c) im Fahrerabteil als auch das Klimagerät (2a) in der Bordküche versagen, klimatisierte Luft, die in dem Klimagerät (2b) im Passagierabteil klimatisiert wird, dem Fahrerabteil zugeführt wird;
dass dann, wenn das Klimagerät (2a) in der Bordküche versagt, klimatisierte Luft, die in dem Klimagerät (2b) im Passagierabteil klimatisiert wird, der Bordküche zugeführt wird; und
dass dann, wenn das Klimagerät (2b) im Passagierabteil versagt, klimatisierte Luft, die in dem Klimagerät in der Bordküche (2a) klimatisiert wird, dem Fahrerabteil zugeführt wird.

2. Schienenfahrzeug (1) gemäß Anspruch 1,
wobei ein vorderes Gangabteil zwischen dem Fahrerabteil und der Bordküche vorgesehen ist, und ein rückwärtiges Gangabteil hinter dem Fahrerabteil vorgesehen ist,
wobei die erste Trennwand (114a) eine Trennwand zwischen dem Fahrerabteil und dem vorderen Gangabteil ist, und
wobei der klimatisierte Luftschacht (32a) von dem Fahrerabteil zum rückwärtigen Gangabteil hin angeordnet ist.

3. Schienenfahrzeug (1) gemäß Anspruch 1 oder 2, ferner umfassend:
eine erste Öffnung, die an einer Decke oberhalb einer in der Bordküche bereitgestellten Vorrichtung mit hoher Wärmebelastung vorgesehen ist; und
einen ersten Abluftschacht (36a), der die Öffnung mit einem ersten Abluftgebläse (29a) verbindet, das in dem Klimagerät (2a) für die Bordküche bereitgestellt ist.

4. Schienenfahrzeug gemäß Anspruch 2, ferner umfassend:
eine Toilette (60), die im rückwärtigen Gangabteil vorgesehen ist;
eine zweite Öffnung, die an einer Decke der Toilette (60) vorgesehen ist; und
einen zweiten Abluftschacht (36b), der die zweite Öffnung mit einem zweiten Abluftgebläse (29b) verbindet, das in dem Klimagerät (2b) für das Passagierabteil bereitgestellt ist.

5. Schienenfahrzeug (1) gemäß Anspruch 3, ferner umfassend:
eine dritte Öffnung (39d), die an einer Decke des Fahrerabteils vorgesehen ist;
einen dritten Abluftschacht, der über einen oberen Teil der ersten Trennwand (114a) von der dritten Öffnung zum ersten Abluftschacht (36a) eine Verbindung herstellt; und
eine dritte Öffnungs-/Schließ-Vorrichtung (38c), die in der Nähe der ersten Trennwand (114a) im dritten Abluftschacht bereitgestellt ist.

6. Schienenfahrzeug (1) gemäß Anspruch 5, ferner umfassend:
eine Steuerungseinheit (116), welche die zweite Öffnungs-/SchließVorrichtung (38a) und die dritte Öffnungs-/Schließ-Vorrichtung (38c) öffnet, wenn das Klimagerät (2c) für das Fahrerabteil versagt.

7. Schienenfahrzeug (1) gemäß Anspruch 6,
wobei die Steuerungseinheit (116) die zweite Öffnungs-/Schließ-Vorrichtung (38a) und die dritte Öffnungs-/Schließ-Vorrichtung (38c) verschließt, wenn ein im Schienenfahrzeug (1) bereitgestellter Rauchdetektionssensor (49a, 49b, 49c) in Betrieb ist.

## Revendications

1. Véhicule ferroviaire (1) comprenant une cabine de conducteur, une cuisine et une cabine de passagers, qui sont respectivement divisées et qui possèdent individuellement des climatiseurs (2a, 2b, 2c), comprenant :
un conduit d'air conditionné (32a) auquel de l'air conditionné est fourni par le climatiseur (2a) pour la cuisine et le climatiseur (2b) pour la cabine de passagers et qui est agencé au-dessus de la cabine de conduite, de la cuisine et de la cabine de passagers ;
un premier dispositif d'ouverture/fermeture (38b) agencé au voisinage d'une première paroi de séparation (114a) en tant que cloison de la cabine de conduite et commandant le flux d'air conditionné dans le conduit d'air conditionné (32a) ; et
un deuxième dispositif d'ouverture/fermeture (38a) disposé au voisinage d'une deuxième paroi de séparation (114c) en tant que cloison entre la cuisine et la cabine de passagers et commandant le flux d'air conditionné dans le conduit d'air conditionné (32a),
dans lequel le premier dispositif d'ouverture/fermeture (38b) et le deuxième dispositif d'ouverture/fermeture (38a) sont configurés de telle sorte que :
lorsque le climatiseur (2c) dans la cabine de conducteur est en panne, l'air conditionné qui a été conditionné dans le climatiseur (2a) de la cuisine est fourni à la cabine du conducteur ;
lorsque le climatiseur (2c) dans la cabine de conducteur et le climatiseur (2a) de la cuisine sont en panne, l'air conditionné qui a été conditionné dans le climatiseur (2b) de la cabine de passagers est fourni à la cabine de conducteur ;
lorsque le climatiseur (2a) de la cuisine tombe en panne, l'air conditionné qui a été conditionné dans le climatiseur (2b) de la cabine de passagers est fourni à la cuisine ; et
lorsque le climatiseur (2b) dans la cabine de passagers est en panne, l'air conditionné qui a été conditionné dans le climatiseur de la cuisine (2a) est fourni à la cabine de passagers.

2. Véhicule ferroviaire (1) selon la revendication 1,
dans lequel un vestibule avant est prévu entre la cabine de conducteur et la cuisine, et un vestibule arrière est prévu derrière la cabine de passagers,
la première paroi de séparation (114a) est une paroi de séparation entre la cabine de conducteur et le vestibule avant, et
le conduit d'air conditionné (32a) est agencé à partir de la cabine de conducteur vers le vestibule arrière.

3. Véhicule ferroviaire (1) selon la revendication 1 ou 2, comprenant en outre :
une première ouverture prévue sur un plafond au-dessus d'un dispositif à forte charge thermique prévu dans la cuisine ; et
un premier conduit d'air d'échappement (36a) reliant l'ouverture à une première soufflante d'échappement (29a) prévue dans le climatiseur (2a) pour la cuisine.

4. Véhicule ferroviaire selon la revendication 2, comprenant en outre :
une toilette (60) prévue dans le vestibule arrière ;
une deuxième ouverture prévue sur un plafond de la toilette (60) ; et
un deuxième conduit d'air d'échappement (36b) reliant la deuxième ouverture à une deuxième soufflante d'échappement (29b) prévue dans le climatiseur (2b) pour la cabine de passagers.

5. Véhicule ferroviaire (1) selon la revendication 3, comprenant en outre :
une troisième ouverture (39d) prévue sur un plafond de la cabine de conducteur ;
un troisième conduit d'air d'échappement reliant la troisième ouverture au premier conduit d'air d'échappement (36a) via une partie supérieure de la première paroi de séparation (114a) ; et
un troisième dispositif d'ouverture/fermeture (38c) prévu au voisinage de la première paroi de séparation (114a) dans le troisième conduit d'air d'échappement.

6. Véhicule ferroviaire (1) selon la revendication 5, comprenant en outre :
un dispositif de commande (116) qui ouvre le deuxième dispositif d'ouverture/fermeture (38a) et le troisième dispositif d'ouverture/fermeture (38c) lorsque le climatiseur (2c) de la cabine de conduite est en panne.

7. Véhicule ferroviaire (1) selon la revendication 6,
dans lequel le dispositif de commande (116) ferme le deuxième dispositif d'ouverture/fermeture (38a) et le troisième dispositif d'ouverture/fermeture (38c) lorsqu'un capteur de détection de fumée (49a, 49b, 49c) prévu dans le véhicule ferroviaire (1) fonctionne.
